# EUROPÄISCHE PATENTSCHRIFT

(11) **EP 2 022 305 B1**
(45) Veröffentlichungstag und Bekanntmachung des Hinweises auf die Patenterteilung: **08.03.2017**
(21) Anmeldenummer: 08009308.1
(22) Anmeldetag: 20.05.2008
(51) Int. Cl.: A01B 29/04

(54) **Landmaschine**
Agricultural machine
Machine agricole

(30) Priorität: 23.07.2007 DE 202007010209 U
(43) Veröffentlichungstag der Anmeldung: 11.02.2009
(73) Patentinhaber: PÖTTINGER Landtechnik GmbH, 4710 Grieskirchen (AT)
(72) Erfinder: Preimess, Hans-Jörg, Dipl.-Ing., 9811 Lendorf (AT)
(74) Vertreter: Thoma, Michael

(56) Entgegenhaltungen:
- EP-A- 0 878 328
- EP-A- 1 380 198
- EP-A- 1 527 665
- WO-A-2006/119596
- DE-A1- 2 654 733

## Beschreibung

Die vorliegende Erfindung betrifft eine Landmaschine, insbesondere Sä- und/oder Drillmaschine oder Bodenbearbeitungsgerät, mit zumindest einer Packerwalze, die aus mehreren nebeneinander angeordneten Packerrädern besteht, wobei jedes Packerrad eine Felge aufweist, auf der ein Reifen sitzt, dessen Reifenlauffläche mehrere voneinander beabstandete Bodenverdichtungsringe aufweist.

Die Reifen eines Packerrades werden herkömmlicherweise als Rillenprofilreifen in Form eines Luftkammerreifens mit aufvulkanisierten Gummirillen ausgebildet, wie dies beispielsweise die DE 101 41 991 A1 zeigt. Auf einer Felge sitzt ein grob gesprochen ballonförmiger, mit Druckluft beaufschlagter Gummireifen, auf dessen Lauffläche keilförmige Bodenverdichtungsringe, die ebenfalls aus Gummi bestehen, aufvulkanisiert sind. Hierdurch erhält die Landmaschine insgesamt gute Laufeigenschaften, auch im Straßenbetrieb. Zum einen wirkt der Aufbau der Packerradwalze an sich, der mehrere nebeneinander angeordnete Packerräder umfasst, einem Aufschwingen und Hüpfen der Maschine im Straßenbetrieb entgegen. Zudem bewirken die luftdruckbefüllten Reifen gute Walk- und Dämpfungseigenschaften. Allerdings sind bisherige Packerreifen nachteilig dahingehend, dass ein Aufschlitzen durch Steine, scharfe Elemente im Boden oder sonstige Hindernisse zu einem Totalausfall des Reifens und somit zu einer totalen Erneuerung des Reifens führen.

Andererseits ist es bei Landmaschinen bekannt, eine durchgehende Rillenprofilwalze zu verwenden, die üblicherweise aus einem kreisrunden Rohr, das sich über die Breite der Landmaschine erstreckt, sowie einer Vielzahl von Profilringen besteht, die auf dem kreisrunden Rohr aufgepresst werden. Die Profilringe sind dabei in der Praxis oft mit ringförmig umlaufenden Hohlkammern für einen besseren Walkeffekt versehen, wie dies beispielsweise die DE 102 15 477 A1 zeigt. Eine solche Rillenprofilwalze kann zwar ebenfalls für den Straßentransport verwendet werden. Ein beträchtlicher Nachteil besteht jedoch darin, dass die Walze in axialer Richtung nur eine durchgehende Reihe bilden kann, was bei passender Erregerfrequenz ein Hüpfen der Maschine unter trockenen Verhältnissen bewirken kann bzw. bei nassen Verhältnissen zu einem verstärkten Einsinken der Walze führen kann. Zudem ist der Reparaturaufwand bei solchen Rillenprofilwalzen ebenfalls enorm. Zwar bringt die Zerstörung eines Rillenprofils bzw. eines Bodenverdichtungsrings nicht gleich die komplette Zerstörung der gesamten Rillenprofilwalze mit sich, jedoch müssen bei Zerstörung beispielsweise eines mittleren Rillenprofils sämtliche seitlich hiervon angeordneten, an sich noch intakten Rillenprofile zuerst demontiert werden, um das zerstörte Rillenprofil austauschen zu können.

Die EP 1 527 665 A1 offenbart eine Landmaschine mit einer Packerwalze, die aus mehreren nebeneinander angeordneten Packerrädern besteht, wobei jedes Packerrad eine Felge bestehend aus vier Felgenteilen, nämlich zwei Felgenbettteilen sowie zwei Felgenschultern aufweist, die an die Felgenbettteile angeschraubt sind.

Hiervon ausgehend liegt der vorliegenden Erfindung die Aufgabe zugrunde, eine verbesserte Landmaschine der genannten Art zu schaffen, die Nachteile des Standes der Technik vermeidet und letzteren in vorteilhafter Weise weiterbildet. Insbesondere soll eine beschädigungsresistente und reparaturfreundliche Ausbildung der Packerradwalze erreicht werden, die günstige Laufeigenschaften sowohl auf der Straße als auch im Bodenbearbeitungsbetrieb erlaubt.

Erfindungsgemäß wird diese Aufgabe durch eine Landmaschine gemäß Anspruch 1 gelöst. Bevorzugte Ausgestaltungen der Erfindung sind Gegenstand der abhängigen Ansprüche.

Es wird also vorgeschlagen, das an sich bekannte Prinzip einer unterteilten Packerwalze, die aus mehreren nebeneinander angeordneten, separaten und insbesondere einzeln aufgehängten Packerrädern besteht, beizubehalten, jedoch den Aufbau der Reifen der Packerräder derart zu gestalten, dass die übliche Beschädigungsanfälligkeit der Reifen der Packerräder vermieden und gleichzeitig eine hohe Reparaturfreundlichkeit erreicht wird. Im Gegensatz zum Stand der Technik bestehen die Reifen der Packerräder nicht mehr aus einem druckluftbefüllten Ballonreifen, auf dessen Lauffläche die Bodenverdichtungsringe des jeweiligen Packerrades aufvulkanisiert sind. Erfindungsgemäß besteht der Reifen auf jeder oder zumindest einer Felge aus mehreren separaten Reifensegmenten, die jeweils zumindest einen Bodenverdichtungsring mit einer Hohlkammer und einen den Bodenverdichtungsring tragenden, die Hohlkammer begrenzenden Stützabschnitt aufweisen, sowie nebeneinander aufgereiht mit den genannten Stützabschnitten auf dem Felgenbett der jeweiligen Felge sitzen. Die einzelnen Packerräder einer Packerwalze können axial sowohl in Reihe als auch versetzt, d.h. mit einem Offset in Fahrtrichtung und/oder vertikaler Richtung, angeordnet werden. Zudem wird eine hohe Reparaturfreundlichkeit erreicht, da die Packerräder einzeln ausgebaut werden können, um auf einem jeweiligen Packerrad einzelne beschädigte Reifensegmente zu reparieren.

Erfindungsgemäß umfassen die Felgen der Packerräder jeweils ein Paar das Felgenbett seitlich begrenzende Felgenbettschultern, wobei die Felge in zwei Felgenteile teilbar ist, von denen jeder Felgenteil eine der genannten Felgenbettschultern aufweist. Hierdurch können durch Teilen der Felge die Reifensegmente in einfacher Weise vom Felgenbett entfernt bzw. auf dieses montiert werden, ohne dass die Felgenbettschultern dies behindern würden. Vorteilhafterweise sind die zumindest zwei Felgenteile in axialer Richtung, d.h. in Richtung der Drehachse, aufeinander setzbar und voneinander trennbar.

Dabei ist hierbei vorgesehen, dass die Reifensegmente mit ihren Stützabschnitten zwischen den beiden Felgenbettschultern einer Felge axial vorspannbar sind. Hierzu ist vorgesehen, dass die lichte Weite des Felgenbetts zwischen den seitlichen Felgenbettschultern ein wenig geringer ist als die Summe der Breite der Stützabschnitte der Reifensegmente. Gegebenenfalls können zwischen den Stützabschnitten der Reifensegmente Distanzringe vorgesehen sein, wobei in diesem Fall dann die lichte Weite zwischen den Felgenbettschultern geringfügig kleiner ist als die Summe der Breiten der Stützabschnitte der Reifensegmente sowie der genannten Distanzringe.

In Weiterbildung der Erfindung verläuft die Trennebene zwischen den beiden Felgenteilen etwa mittig zwischen den beiden Felgenbettschultern durch das Felgenbett, insbesondere senkrecht zur Drehachse der Felge. Vorausgesetzt ist eine zweiteilige Ausbildung der Felge, wobei die Felge in zwei zueinander etwa symmetrische Felgenteile geteilt ist. Dies ist einerseits hinsichtlich der Laufeigenschaften und der sich ergebenden dynamischen Kräfte vorteilhaft. Zum anderen erleichtert dies bei einfacher und damit kostengünstig zu fertigender Gestaltung der Fertigung die Reparierbarkeit bzw. Austauschbarkeit einzelner Reifensegmente, da bei mittiger Teilung des Felgenbetts zumindest statistisch betrachtet die kleinste Anzahl intakter Reifensegmente vom Felgenbett entfernt werden muss, um ein beschädigtes Reifensegment austauschen zu können.

Der Reifen eines Packerrades kann grundsätzlich in eine verschiedene Anzahl von Reifensegmenten unterteilt sein. Gemäß einer bevorzugten Ausführung der Erfindung sind auf einer Felge zwischen zwei und acht, vorzugsweise zwischen zwei und sechs und insbesondere vier Reifensegmente angeordnet. Hierdurch ergibt sich ein guter Kompromiss zwischen Reparaturfreundlichkeit einerseits und guten Laufeigenschaften mit guten Bodenandruckkonditionen andererseits. Vorteilhafterweise ist auf jeder Felge eine geradzahlige Anzahl von Reifensegmenten vorgesehen, so dass bei mittiger Teilung der Felge keine über die Trennebene hinweggehenden Reifensegmente die Montage behindern.

Grundsätzlich möglich ist es, dass ein Reifensegment zwei oder mehr von einem Stützabschnitt radial vorspringende Bodenverdichtungsringe aufweist. In vorteilhafter Weiterbildung der Erfindung besitzt jedoch jedes Reifensegment genau einen Bodenverdichtungsring, der von dem Stützabschnitt des Reifensegments getragen wird.

Je nach Anwendungsfall kann die Höhe der einzelnen Reifensegmente gegenüber ihrer Breite variieren, insbesondere um je nach gewünschter Bodenanpassung mehr oder weniger vorstehende Bodenverdichtungsringe zu verwenden. Gemäß einer vorteilhaften Ausführung der Erfindung kann jedes Reifensegment eine Höhe besitzen, die zwischen 50 % und 150 %, vorzugsweise etwa zwischen 60 % und 110 % der Breite des jeweiligen Reifensegments beträgt. Dabei können am Rand eines Packerrades liegende Reifensegmente eine geringere Breite besitzen als mittig angeordnete Reifensegmente, die beidseitig von weiteren Reifensegmenten flankiert werden. Während solche mittige Reifensegmente vorteilhafterweise eine Höhe besitzen können, die zwischen 60 % und 90 % der Breite des Reifensegments beträgt, können am Rand liegende Reifensegmente ein Verhältnis von Höhe zu Breite von etwa 1:1 aufweisen. Es versteht sich jedoch, dass je nach Anwendungsfall das Verhältnis von Höhe zu Breite eines Reifensegments variieren kann. Als Höhe eines Reifensegments ist dabei im Querschnitt betrachtet der Abstand der innenliegenden Umfangsfläche des Stützabschnitts von der äußeren Umfangsfläche des darauf sitzenden Bodenverdichtungsrings zu verstehen.

Das Verhältnis des Durchmessers eines Rades zur Breite des gesamten Rades kann grundsätzlich ebenfalls verschieden gewählt und an die Geometriebedingungen der jeweiligen Maschine angepasst sein. Gemäß einer vorteilhaften Ausführung der Erfindung kann das Verhältnis des Durchmessers eines Rades zu seiner Breite etwa 0,8 bis 5 und vorzugsweise etwa 1,5 bis 3 betragen.

Je nach Breite der jeweiligen Landmaschine kann eine Packerwalze mehr als 5, vorzugsweise mehr als 10 und insbesondere etwa 10 bis 30 nebeneinander angeordnete Packerräder umfassen, wobei diese quer zur Achsrichtung versetzt sein können.

Die Reifensegmente eines Packerrades sind vorteilhafterweise nicht einzeln am Felgenbett befestigt, sondern nur in ihrer Gesamtheit durch die seitlichen Felgenbettschultern fixiert. Würde eine der Felgenbettschultern beseitigt werden, könnten alle Reifensegmente in Achsrichtung vom Felgenbett abgezogen werden, da die einzelnen Reifensegmente nicht formschlüssig am Felgenbett befestigt sind.

Das Felgenbett besitzteine glatte und im Querschnitt betrachtet ebene Oberfläche. Das Felgenbett besitzt auf seiner Außenmantelfläche Kreiszylinderform, wobei an den Enden des Kreiszylinders die vorgenannten Felgenbettschultern nach außen flanschartig vorstehen.

Die einzelnen Reifensegmente besitzen vorteilhafterweise nur den Hohlraum im Bodenvertiefungsring, der vorteilhafterweise ringförmig umlaufend ausgebildet ist und eine abgeschlossene Gaskammer bildet. Der den Bodenverdichtungsring tragende Stützabschnitt des jeweiligen Reifensegments besteht vorteilhafterweise aus Vollmaterial und ist hohlraumfrei ausgebildet. Der Stützabschnitt besitzt dabei vorteilhafterweise eine zylindrisch ausgebildete Innenmantelfläche, so dass der Stützabschnitt hohlraumfrei flächig am Felgenbett anliegend auf der Felge sitzt.

Vorteilhafterweise besteht jedes Reifensegment aus einem elastischen gummiartigen Material.

Die Erfindung wird nachfolgend anhand eines bevorzugten Ausführungsbeispiels und zugehöriger Zeichnungen näher erläutert. In den Zeichnungen zeigen:
- Fig. 1:: eine schematische, perspektivische Ansicht einer Sämaschine mit einer Packerwalze, die aus mehreren nebeneinander angeordneten, einzeln aufgehängten Packerrädern besteht,
- Fig. 2:: eine perspektivische, teilgeschnittene Ansicht eines Packerrades, das die geteilte Ausbildung der Felge und den aus mehreren separaten Reifensegmenten zusammengesetzten Aufbau des Reifens eines Packerrades zeigt,
- Fig. 3:: eine Draufsicht auf das Packerrad aus Fig. 2 in Achsrichtung,
- Fig. 4:: eine Draufsicht auf die Lauffläche des Packerrades aus den vorhergehenden Figuren, und
- Fig. 5:: einen Querschnitt durch das Packerrad aus den vorhergehenden Figuren entlang der Linie A-A in Fig. 3.

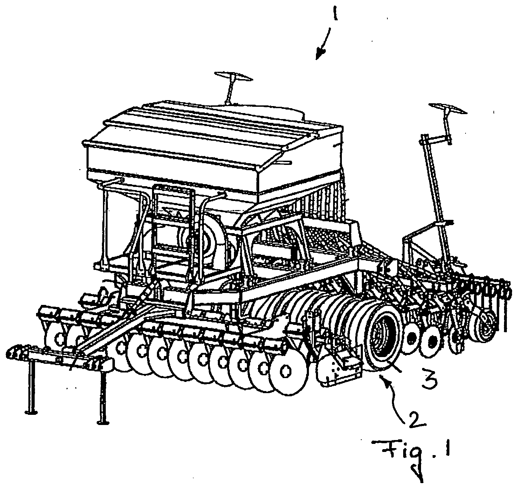

Figur 1 zeigt als Landmaschine 1 eine Sämaschine mit den an sich üblichen Bausteinen zum Ausbringen von Saatgut umfassend einen Saatgutspeicher, eine Dosiervorrichtung, einen Verteiler und Ausbringelemente zum Ablegen des Saatguts im oder auf dem Erdboden. Weiterhin umfasst die Sämaschine eine Packerwalze 2, die aus mehreren, nebeneinander angeordneten Packerrädern 3 besteht, die vorteilhafterweise einzeln, ggf. auch gruppenweise zusammengefasst aufgehängt sind.

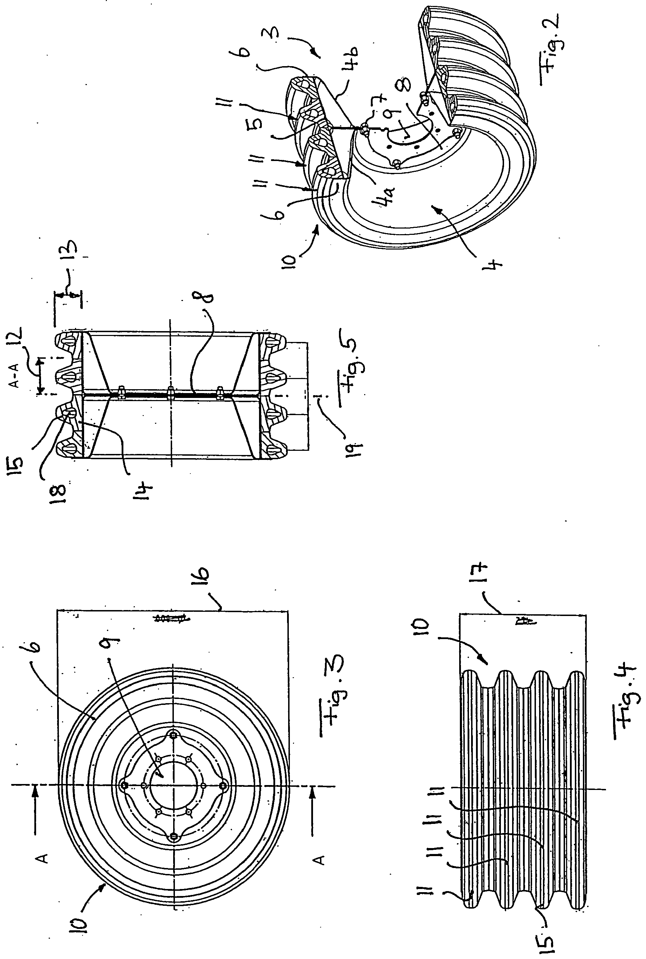

Jedes Packerrad 3 umfasst dabei eine drehbar gelagerte Felge 4, die ein im wesentlichen zylindrisches Felgenbett 5 aufweist, das seitlich von zwei radial nach außen vorspringenden Felgenbettschultern 6 begrenzt wird, vgl. Figuren 2 und 5.

Wie Figur 2 und Figur 5 zeigt, ist die Felge 4 in zwei zueinander etwa symmetrische Felgenteile 4a und 4b unterteilt, wobei die Trennebene zwischen den beiden Felgenteilen 4a und 4b etwa mittig zwischen den Felgenbettschultern 6 senkrecht zur Drehachse der Felge 4 verläuft. Jeder Felgenteil 4a und 4b kann hierbei einen den jeweiligen Felgenbettteil tragenden Scheibenabschnitt aufweisen, die mittels geeigneter Spannmittel, insbesondere Schrauben 7, aufeinander spannbar sind, um die Felge 4 aus den beiden Felgenteilen 4a und 4b zusammenzusetzen. In dem genannten Scheibenabschnitt 8 ist eine Nabe 9 ausgebildet, um das jeweilige Packerrad 3 zu lagern.

Wie die Figuren 2 und 5 zeigen, sitzt auf der Felge 4 ein Reifen 10, der aus mehreren jeweils ringförmigen Reifensegmenten 11 zusammengesetzt ist. Die genannten Reifensegmente 4 sind hierbei axial nebeneinander liegend auf dem Felgenbett 5 aufgereiht, wobei in der gezeichneten Ausführungsform vier Reifensegmente 11 vorgesehen sind.

Die Reifensegmente 11 sind hierbei auf dem Felgenbett 5 zwischen den Felgenbettschultern 6 axial vorgespannt, was beim Aufeinanderschrauben der beiden Felgenteile 4a und 4b dadurch erreicht werden kann, dass die lichte Weite zwischen den beiden Felgenbettschultern 6 geringfügig kleiner ist als die Summe der Breiten 12 der einzelnen Reifensegmente 11.

Wie insbesondere Figur 5 zeigt, besteht jedes Reifensegment 11 aus einem radial innenliegenden Stützabschnitt 14, der mit einer zylindrischen Innenmantelfläche satt auf der zylindrischen Außenfläche des Felgenbetts 5 sitzt und einen radial nach außen vorspringenden, im Querschnitt vorzugsweise abgestumpft V-förmigen Bodenverdichtungsring 15 trägt, der integral einstückig an den genannten Stützabschnitt 14 angeformt ist. Die Seitenflanken der Stützabschnitte 14 sind dabei vorteilhafterweise eben ausgebildet und in einer Ebene senkrecht zur Drehachse liegend angeordnet, so dass die Stützabschnitte 14 satt aneinander anliegen können, wenn die Reifensegmente 11 zwischen den Felgenbettschultern 6 vorgespannt sind, vgl. Figur 5.

Wie die Figuren 2 und 5 zeigen, ist in jedem Bodenverdichtungsring 15 ein Hohlraum 18 in Form einer Luftkammer vorgesehen, der ringförmig umlaufend durch das jeweilige Reifensegment 11 verläuft und konturmäßig an die Kontur des Bodenverdichtungsrings 15 angepasst ist, so dass letzterer eine im wesentlichen gleichbleibende Wandstärke aufweist, vgl. Figur 5.

In der gezeichneten Ausführungsform beträgt das Verhältnis der Höhe 13 zur Breite 12 der beiden innenliegenden Reifensegmente 11 etwa 2:3, während das Verhältnis der Höhe 13 zur Breite 12 der außenliegenden Reifensegmente 11 etwa 1:1 beträgt, da die beiden außen an den Felgenbettschultern 6 anliegenden Reifensegmente 11 nur zu einer Seite vorspringende Stützabschnitte 14 aufweisen, vgl. Figur 5.

Das Verhältnis des Raddurchmesser 16 zur Radbreite 17 beträgt vorteilhafterweise zwischen 0,8 und 5, wobei das Rad der gezeichneten Ausführungsform vorteilhafterweise ein Verhältnis Raddurchmesser 16 zu Radbreite 17 von etwa 2 aufweist.

## Patentansprüche

1. Landmaschine, nämlich Sä- und/oder Drillmaschine oder Bodenbearbeitungsgerät, mit zumindest einer Packerwalze (2), die aus mehreren nebeneinander angeordneten Packerrädern (3) besteht, wobei jedes Packerrad (3) eine Felge (4) aufweist, auf der ein Reifen (10) sitzt, dessen Reifenlauffläche mehrere voneinander beabstandete Bodenverdichtungsringe (15) aufweist, wobei der Reifen (10) auf jeder oder zumindest einer Felge (4) aus mehreren separaten Reifensegmenten (11) besteht, die jeweils zumindest einen Bodenverdichtungsring (15) mit einer Hohlkammer (18) und einen den Bodenverdichtungsring (15) tragenden, die Hohlkammer (18) begrenzenden Stützabschnitt (14) aufweisen, sowie nebeneinander aufgereiht mit den genannten Stützabschnitten (14) auf dem Felgenbett (5) der jeweiligen Felge (4) sitzen, wobei die Felgen (4) jeweils ein Paar das auf seiner Außenmantelfläche kreiszylindrische Felgenbett (5) seitlich begrenzende Felgenbettschultern (6) aufweisen und in mehrere Felgenteile unterteilt sind, **dadurch gekennzeichnet, dass**
die Felgen (4) jeweils zweiteilig ausgebildet sind und aus zwei zueinander symmetrischen Felgenteilen (4a, 4b) bestehen, wobei jeder Felgenteil (4a, 4b) einen Felgenbettteil, einen den jeweiligen Felgenbetteil tragenden Scheibenabschnitt, sowie eine der genannten Felgenbettschultern (6) aufweist,
wobei die beiden Scheibenabschnitte durch Spannmittel aufeinander gespannt sind, um die Felge (4) aus den beiden Felgenteilen (4a, 4b) zusammenzusetzen.

2. Landmaschine nach einem der vorhergehenden Ansprüche, wobei die Trennebene (19) zwischen den beiden Felgenteilen (4a, 4b) etwa mittig zwischen den beiden Felgenbettschultern (6) durch das Felgenbett (5) verläuft.

3. Landmaschine nach einem der vorhergehenden Ansprüche, wobei auf einer Felge (4) zwischen zwei und acht, vorzugsweise zwischen zwei und sechs, insbesondere vier, Reifensegmente (11) angeordnet sind.

4. Landmaschine nach einem der vorhergehenden Ansprüche, wobei jedes Reifensegment (11) genau einen Bodenverdichtungsring (15) aufweist.

5. Landmaschine nach einem der vorhergehenden Ansprüche, wobei jedes Reifensegment (11) eine Höhe (13) besitzt, die zwischen 50 % und 150 %, vorzugsweise zwischen 60 % und 110 % der Breite (12) des Reifensegments (11) beträgt.

6. Landmaschine nach einem der vorhergehenden Ansprüche, wobei das Verhältnis des Durchmessers (16) eines Packerrades (3) zu seiner Breite (17) etwa 0,8 bis 5, vorzugsweise 1,5 bis 3, beträgt.

7. Landmaschine nach einem der vorhergehenden Ansprüche, wobei die Reifensegmente (11) axial auf dem Felgenbett (5) ausschließlich durch dessen Felgenbettschultern (6) fixiert sind.

8. Landmaschine nach dem vorhergehenden Anspruch, wobei ausschließlich in dem Bodenverdichtungsring (15) eine Hohlkammer (18) vorgesehen ist und/oder der Stützabschnitt (14) aus Vollmaterial besteht.

9. Landmaschine nach einem der vorhergehenden Ansprüche, wobei der Stützabschnitt (14) hohlraumfrei flächig am Felgenbett anliegend auf der Felge (4) sitzt.

10. Landmaschine nach einem der vorhergehenden Ansprüche, wobei die lichte Weite des Felgenbetts (5) zwischen den seitlichen Felgenbettschultern (6) ein wenig geringer ist als die Summe der Breiten (12) der Stützabschnitte (14) der Reifensegmente (11) in deren unbeaufschlagtem Zustand.

## Claims

1. An agricultural machine, namely a seeder and/or a seed drill or a soil cultivation device, having at least one packer roller (2) that comprises a plurality of packer wheels (3) arranged next to one another, wherein each packer wheel (3) has a rim (4) on which a tyre (10) is seated whose tyre tread has a plurality of soil compaction rings (15) that are spaced apart from one another, wherein the tyre (10) on each or on at least one rim (4) comprises a plurality of separate tyre segments (11) that each have at least one soil compacting ring (15) having a hollow chamber (18) and a support section (14) supporting the soil compaction ring (15) and bounding the hollow chamber (18) and that are seated in a row next to one another together with the named support sections (14) on the rim well (5) of the respective rim (4), with the rims (4) each having a pair of rim well shoulders (6) laterally bounding the rim well (5) that is circularly cylindrical on its outer jacket surface and being divided into a plurality of rim parts,
**characterized in that**
the rims (4) are each formed in two parts and comprise two mutually symmetrical rim parts (4a, 4b), with each rim part (4a, 4b) having a rim well part, a disc section supporting the respective rim well part and one of the named rim well shoulders (6),
wherein the two disc sections are clamped to one another by clamping means to assemble the rim (4) from the two rim parts (4a, 4b).

2. An agricultural machine in accordance with one of the preceding claims,
wherein the separating plane (19) between the two rim parts (4a, 4b) extends approximately centrally between the two rim well shoulders (6) through the rim well (5).

3. An agricultural machine in accordance with one of the preceding claims,
wherein between two and eight, preferably between two and six, in particular four, tyre segments (11) are arranged on a rim (4).

4. An agricultural machine in accordance with one of the preceding claims,
wherein each tyre segment (11) has exactly one soil compaction ring (15).

5. An agricultural machine in accordance with one of the preceding claims,
wherein each tyre segment (11) has a height (11) that amounts to between 50% and 150%, preferably between 60% and 110%, of the width (12) of the tyre segment (11).

6. An agricultural machine in accordance with one of the preceding claims,
wherein the ratio of the diameter (16) of a packer wheel (3) to its width (17) amounts to approximately 0.8 to 5, preferably 1.5 to 3.

7. An agricultural machine in accordance with one of the preceding claims,
wherein the tyre segments (11) are fixed axially on the rim well (5) exclusively by its rim well shoulders (6).

8. An agricultural machine in accordance with the preceding claim, wherein a hollow chamber (18) is provided exclusively in the soil compaction ring (15); and/or wherein the support section (14) comprises a solid material.

9. An agricultural machine in accordance with one of the preceding claims,
wherein the support section (14) is seated free of a hollow space in a planar manner at the rim well lying on the rim (4).

10. An agricultural machine in accordance with one of the preceding claims,
wherein the clearance of the rim well (5) between the rim well shoulders (6) is a little smaller than the sum of the widths (12) of the support sections (14) of the tyre segments (11) in their unloaded state.

## Revendications

1. Machine agricole, à savoir semoir et/ou machine à semer en ligne ou outil pour le travail du sol, comprenant au moins un rouleau tasseur (2), qui se compose de plusieurs roues tasseuses (3) disposées les unes à côté des autres, chaque roue tasseuse (3) comportant une jante (4), sur laquelle est placé un pneu (10), dont la bande de roulement comporte plusieurs anneaux de compactage du sol (15) espacés les uns des autres, le pneu (10) sur chaque ou au moins sur une jante (4) se composant de plusieurs segments de pneu (11) séparés, qui comportent respectivement au moins un anneau de compactage du sol (15) doté d'une cavité (18) et une portion d'appui (14) portant l'anneau de compactage du sol (15) et limitant la cavité (18), et qui sont placés alignés les uns à côté des autres avec lesdites portions d'appui (14) sur la base de jante (5) de la jante (4) respective, les jantes (4) comportant respectivement une paire d'épaulements de base de jante (6) limitant latéralement la base de jante (5) qui est cylindrique circulaire sur sa surface d'enveloppe extérieure, et étant divisées en plusieurs parties de jante,
**caractérisée en ce que**
les jantes (4) sont réalisées respectivement en deux parties et se composent de deux parties de jante (4a, 4b) symétriques entre elles, chaque partie de jante (4a, 4b) comportant une partie base de jante, une portion de disque portant la partie base de jante respective, ainsi qu'un desdits épaulements de base de jante (6),
les deux portions de disque étant serrées l'une sur l'autre par des moyens de serrage, pour assembler la jante (4) à partir des deux parties de jante (4a, 4b).

2. Machine agricole selon l'une des revendications précédentes, dans laquelle le plan de séparation (19) entre les deux parties de jante (4a, 4b) s'étend à travers la base de jante (5) approximativement à mi-distance entre les deux épaulements de base de jante (6).

3. Machine agricole selon l'une des revendications précédentes, dans laquelle entre deux et huit, de préférence entre deux et six, en particulier quatre segments de pneu (11) sont disposés sur une jante (4).

4. Machine agricole selon l'une des revendications précédentes, dans laquelle chaque segment de pneu (11) comporte exactement un anneau de compactage du sol (15).

5. Machine agricole selon l'une des revendications précédentes, dans laquelle chaque segment de pneu (11) possède une hauteur (13), qui représente entre 50 % et 150 %, de préférence entre 60 % et 110 % de la largeur (12) du segment de pneu (11).

6. Machine agricole selon l'une des revendications précédentes, dans laquelle le rapport du diamètre (16) d'une roue tasseuse (3) à sa largeur (17) est d'environ 0,8 à 5, de préférence 1,5 à 3.

7. Machine agricole selon l'une des revendications précédentes, dans laquelle les segments de pneu (11) sont fixés de manière axiale sur la base de jante (5) exclusivement par les épaulements de base de jante (6) de celle-ci.

8. Machine agricole selon la revendication précédente, dans laquelle une cavité (18) est prévue exclusivement dans l'anneau de compactage du sol (15) et/ou la portion d'appui (14) se compose de matériau plein.

9. Machine agricole selon l'une des revendications précédentes, dans laquelle la portion d'appui (14) est placée sur la jante (4) sans espace vide et reposant à plat sur la base de jante.

10. Machine agricole selon l'une des revendications précédentes, dans laquelle l'écartement de la base de jante (5) entre les épaulements de base de jante (6) latéraux est légèrement inférieur à la somme des largeurs (12) des portions d'appui (14) des segments de pneu (11) dans leur état non sollicité.
